# EUROPÄISCHE PATENTSCHRIFT

(11) **EP 3 929 019 B1**
(45) Veröffentlichungstag und Bekanntmachung des Hinweises auf die Patenterteilung: **13.12.2023**
(21) Anmeldenummer: 21178407.9
(22) Anmeldetag: 09.06.2021
(51) Int. Cl.: B60L 1/00, B60L 9/00, B60L 50/60, B60L 50/53, B60L 58/16, B60L 58/18, B60L 58/26

(54) **FAHRZEUG, INSBESONDERE SCHIENENFAHRZEUG MIT TRAKTIONS- UND BORDNETZ**
VEHICLE, IN PARTICULAR RAILING VEHICLE WITH TRACTION- AND BOARD NET
VEHICULE, EN PARTICULIER VEHICULE FERROVIAIRE AVEC TRACTION- ET RÉSEAU DE BORD

(30) Priorität: 22.06.2020 DE 102020207670
(43) Veröffentlichungstag der Anmeldung: 29.12.2021
(73) Patentinhaber: Siemens Mobility GmbH, 81739 München (DE)
(72) Erfinder: Jaumann, Tony, 90419 Nürnberg (DE); Meller, Meike, 90425 Nürnberg (DE); Meyer, Andreas, 90530 Wendelstein (DE); Schellhaus, Stefan, 91056 Erlangen (DE); Treutler, Helmut, 47804 Krefeld (DE); Wilhelm, Markus, 41239 Mönchengladbach (DE); Winzen, Andreas, 90403 Nürnberg (DE)
(74) Vertreter: Siemens Patent Attorneys

(56) Entgegenhaltungen:
- DE-A1-102010 048 353
- US-A1- 2016 152 129
- US-A1- 2020 016 980

## Beschreibung

Die Erfindung bezieht sich auf ein Schienenfahrzeug, das mit einem elektrischen Traktionsnetz zum Speisen elektrischer Antriebe sowie einem elektrischen Bordnetz zum Speisen sonstiger Komponenten des Fahrzeugs ausgestattet ist. Schienenfahrzeuge dieser Art sind beispielsweise im Bereich der Schienenfahrzeugtechnik bzw. Eisenbahntechnik bekannt. Üblicherweise werden die Schienenfahrzeuge über eine Oberleitung bzw. einen Fahrdraht mit elektrischer Energie versorgt. Darüber hinaus sind bei vielen modernen Schienenfahrzeugen neuerdings Batterien vorgesehen, die im Falle eines Ausfalls der streckenseitigen Energieversorgung oder einem Befahren nichtelektrifizierter Strecken einen Weiterbetrieb des Fahrzeugs mit der Energie der Batterien ermöglichen.

Bei den heute bekannten Schienenfahrzeugen sind Batterien entweder dem Traktionsnetz oder dem Bordnetz zugeordnet.

Das Dokument US 2016/152129 A1 beschreibt ein Schienenfahrzeug, das über eine Batterie oder über das Traktionsnetz versorgt werden kann.

Das Dokument US 2020/016980 A1 beschreibt die Überwachung einer Batterie zur Versorgung des Bordnetzes.

Der Erfindung liegt die Aufgabe zugrunde, Schienenfahrzeuge mit Traktions- und Bordnetz hinsichtlich des Batteriemanagements zu verbessern.

Diese Aufgabe wird erfindungsgemäß durch ein Schienenfahrzeug mit den Merkmalen gemäß Patentanspruch 1 gelöst. Vorteilhafte Ausgestaltungen des erfindungsgemäßen Schienenfahrzeugs sind in abhängigen Patentansprüchen angegeben.

Danach ist erfindungsgemäß vorgesehen, dass das Schienenfahrzeug derart ausgestaltet ist, dass es zumindest eine Batterie in einem Normalbetrieb und einem Sonderbetrieb betreiben kann, wobei die Batterie im Normalbetrieb über mindestens einen batterieeigenen oder der Batterie zugeordneten Traktionsnetzschalter mit dem Traktionsnetz verbunden wird und im Sonderbetrieb durch den Traktionsnetzschalter von dem Traktionsnetz getrennt wird, wobei die Batterie im Falle einer bereits während des Normalbetriebs bestehenden Verbindung zum Bordnetz im Sonderbetrieb mit dem Bordnetz verbunden bleibt und andernfalls mit dem Bordnetz verbunden wird.

Ein wesentlicher Vorteil des erfindungsgemäßen Schienenfahrzeugs besteht darin, dass die Batterie oder Batterien, die im Normalbetrieb dem Traktionsnetz zugeordnet sind und diesem dienen, vom Traktionsnetz getrennt werden können und stattdessen zum Betrieb des Bordnetzes herangezogen werden können. Dies wird erfindungsgemäß durch die den Batterien zugeordneten oder batterieeigenen Traktionsnetzschalter ermöglicht, die die Batterien vom Traktionsnetz trennen können. Das Trennen der Batterien vom Traktionsnetz ist beispielsweise dann von Vorteil, wenn, wie weiter unten noch näher im Detail erläutert werden wird, die Batterien aufgrund von Alterung oder aus anderen Gründen vorgegebene Kriterien, die für einen Betrieb am oder mit dem Traktionsnetz unabdinglich oder zumindest vorteilhaft sind, nicht mehr erfüllen.

Erfindungsgemäß weist das Schienenfahrzeug eine Überwachungseinrichtung auf, die den Zustand, insbesondere den Alterungszustand, der zumindest einen Batterie erfasst und die Batterie im Normalbetrieb betreibt und mit dem Traktionsnetz verbunden lässt, solange die Batterie ein vorgegebenes Zustandskriterium erfüllt, und die Batterie im Sonderbetrieb betreibt und von dem Traktionsnetz trennt, sobald der Zustand der Batterie das vorgegebene Zustandskriterium nicht mehr erfüllt.

Bei einer als vorteilhaft angesehenen Variante ist vorgesehen, dass die Batterie oder zumindest eine der Batterien im Normalbetrieb mittels eines batterieeigenen oder der Batterie zugeordneten Bordnetzschalters von dem Bordnetz getrennt ist und im Sonderbetrieb mittels des batterieeigenen oder der Batterie zugeordneten Bordnetzschalters mit dem elektrischen Bordnetz verbunden wird.

Bei einer anderen als vorteilhaft angesehenen Variante ist vorgesehen, dass die Batterie oder zumindest eine der Batterien bereits im Normalbetrieb mit dem Bordnetz über zumindest eine Leitung fest verbunden ist und im Sonderbetrieb mit dem elektrischen Bordnetz verbunden bleibt.

Das Schienenfahrzeug ist vorzugsweise derart ausgestaltet, dass es jede Batterie, die im Normalbetrieb mit dem Traktionsnetz verbunden ist, nachfolgend auch traktionsnetzbezogene Batterie genannt, batterieindividuell im Normalbetrieb oder im Sonderbetrieb betreiben kann, wobei jede der Batterien im Normalbetrieb über mindestens einen batterieeigenen oder der Batterie zugeordneten Traktionsnetzschalter mit dem Traktionsnetz verbunden wird und im Sonderbetrieb durch den jeweiligen Traktionsnetzschalter von dem Traktionsnetz getrennt wird.

Auch ist es vorteilhaft, wenn das Schienenfahrzeug für zumindest eine der traktionsnetzbezogenen Batterien, vorzugsweise jeweils für jede traktionsnetzbezogene Batterie, eine batterieeigene Überwachungseinrichtung aufweist, die den Zustand, insbesondere den Alterungszustand, der jeweiligen Batterie erfasst und die Batterie im Normalbetrieb betreibt und mit dem Traktionsnetz verbunden lässt, solange die Batterie ein vorgegebenes, insbesondere batterieindividuell vorgegebenes, Zustandskriterium erfüllt, und die Batterie im Sonderbetrieb betreibt und von dem Traktionsnetz trennt, sobald der Zustand der Batterie das vorgegebene, insbesondere das batterieindividuell vorgegebene, Zustandskriterium nicht mehr erfüllt.

Bei einer anderen vorteilhaften Variante ist vorgesehen, dass das Schienenfahrzeug eine Zentraleinrichtung aufweist, die mit Traktionsnetzschaltern zweier oder mehr Batterien in Verbindung steht und diese von dem Normalbetrieb in den Sonderbetrieb umschalten kann.

Vorteilhaft ist es insbesondere, wenn das Schienenfahrzeug eine Zentraleinrichtung aufweist, die mit zwei oder mehr batterieeigenen Steuereinrichtungen in Verbindung steht und die Traktionsnetzschalter der jeweiligen Batterien unter Einbezug der batterieeigenen Steuereinrichtungen umschalten kann.

Die Batterie kann einen Bestandteil eines Batteriezweigs einer zumindest zwei Batteriezweige aufweisenden Traktionsbatterieeinheit des Schienenfahrzeugs bilden.

Bei der letztgenannten Variante ist es von Vorteil, wenn das Schienenfahrzeug derart ausgestaltet ist, dass es jeden der Batteriezweige der Traktionsbatterieeinheit zweigindividuell in dem Normalbetrieb und dem Sonderbetrieb betreiben kann, wobei jeder der Batteriezweige im Normalbetrieb über mindestens einen batteriezweigeigenen oder dem Batteriezweig zugeordneten Traktionsnetzschalter mit dem Traktionsnetz verbunden wird und im Sonderbetrieb durch den Traktionsnetzschalter von dem Traktionsnetz getrennt wird, wobei jeder der Batteriezweige im Falle einer bereits im Normalbetrieb bestehenden Verbindung zum Bordnetz mit diesem verbunden bleibt und andernfalls mit dem Bordnetz verbunden wird.

Das Schienenfahrzeug weist für zumindest einen der, vorzugsweise jeweils jeden der, Batteriezweige vorzugsweise eine batteriezweigeigene Überwachungseinrichtung auf, die den Zustand, insbesondere den Alterungszustand, des jeweiligen Batteriezweigs erfasst und eine Zustandsangabe erzeugt, die angibt, ob der jeweilige Batteriezweig das Zustandskriterium, das vorzugsweise batteriezweigindividuell ist, erfüllt oder nicht.

Bei der letztgenannten Variante ist es außerdem von Vorteil, wenn bei zumindest einem der, vorzugsweise jeweils jedem der, Batteriezweige die batteriezweigeigene Überwachungseinrichtung mit einer batteriezweigeigenen Steuereinrichtung in Verbindung steht, die in Abhängigkeit von der Zustandsangabe den jeweiligen Traktionsnetzschalter öffnet oder geschlossen lässt.

Bei zumindest einem der, vorzugsweise jeweils jedem der Batteriezweige steht die batteriezweigeigene Überwachungseinrichtung bevorzugt mit einer Zentraleinrichtung in Verbindung, die in Abhängigkeit von der Zustandsangabe der Überwachungseinrichtung den jeweiligen Traktionsnetzschalter öffnet oder geschlossen lässt.

Vorteilhaft ist es, wenn die Batterien oder mit diesen gebildete Batteriemodule oder Batteriezweige jeweils mit einer betriebsartabhängig arbeitenden Kühleinrichtung ausgestattet sind, die die Batterien betriebsartabhängig, also abhängig vom Normalbetrieb oder Sonderbetrieb, unterschiedlich kühen.

Vorteilhaft ist es auch, wenn die Batterien oder mit diesen gebildete Batteriemodule oder Batteriezweige jeweils mit einem betriebsartabhängig arbeitenden Steuergerät ausgestattet sind. Die Steuergeräte steuern die Batterien betriebsartabhängig, also abhängig vom Normalbetrieb oder Sonderbetrieb, unterschiedlich und weisen hierzu betriebsartabhängige Steuermodi auf.

Die Netzspannung im Traktionsnetz ist vorzugsweise höher als die Netzspannung im Bordnetz.

Die Batterien und das Bordnetz können im Sonderbetrieb über einen zentralen oder alternativ über batterieindividuell zugeordnete DC/DC-Wandler gekoppelt sein.

Das Traktionsnetz ist vorzugsweise zur Aufnahme und zum Weiterleiten von Energie des Antriebs in Richtung der Batterie geeignet.

Die Erfindung bezieht sich darüber hinaus auf ein Verfahren zum Betreiben eines Schienenfahrzeugs, das ausgestattet ist mit zumindest einem elektrischen Traktionsnetz, mit dem sich zumindest ein Antrieb des Schienenfahrzeugs mit elektrischer Energie speisen lässt, zumindest einem elektrischen Bordnetz und zumindest einer Batterie.

Erfindungsgemäß ist vorgesehen, dass die Batterie wahlweise in einem Normalbetrieb oder einem Sonderbetrieb betrieben wird, wobei die Batterie im Normalbetrieb über mindestens einen batterieeigenen oder der Batterie zugeordneten Traktionsnetzschalter mit dem Traktionsnetz verbunden wird und im Sonderbetrieb durch den Traktionsnetzschalter von dem Traktionsnetz getrennt wird, wobei die Batterie im Sonderbetrieb im Falle einer bereits im Normalbetrieb bestehenden Verbindung zum Bordnetz mit diesem verbunden bleibt und andernfalls mit dem Bordnetz verbunden wird. Ferner ist vorgesehen, dass das Schienenfahrzeug eine Überwachungseinrichtung aufweist, die den Zustand der Batterie erfasst und die Batterie im Normalbetrieb betreibt und mit dem Traktionsnetz verbunden lässt, solange die Batterie ein vorgegebenes Zustandskriterium erfüllt, und die Batterie im Sonderbetrieb betreibt und von dem Traktionsnetz trennt, sobald der Zustand der Batterie das vorgegebene Zustandskriterium nicht mehr erfüllt.

Bezüglich der Vorteile des erfindungsgemäßen Verfahrens sowie vorteilhafter Ausgestaltungen des erfindungsgemäßen Verfahrens sei auf die obigen Ausführungen im Zusammenhang mit dem erfindungsgemäßen Schienenfahrzeug sowie dessen vorteilhafte Ausgestaltungen verwiesen.

Die Erfindung wird nachfolgend anhand von Ausführungsbeispielen näher erläutert; dabei zeigen beispielhaft:
- Figur 1: in einer schematischen Ansicht Bestandteile eines Ausführungsbeispiels für ein erfindungsgemäßes Schienenfahrzeug mit dezentral arbeitenden Batteriemodulen mit eigenen DC/DC-Wandlern,
- Figur 2: in einer schematischen Ansicht Bestandteile eines Ausführungsbeispiels für ein erfindungsgemäßes Schienenfahrzeug mit zentral gesteuerten Batteriemodulen mit eigenen DC/DC-Wandlern,
- Figur 3: in einer schematischen Ansicht Bestandteile eines Ausführungsbeispiels für ein erfindungsgemäßes Schienenfahrzeug mit dezentral arbeitenden Batteriemodulen ohne eigene DC/DC-Wandler,
- Figur 4: in einer schematischen Ansicht Bestandteile eines Ausführungsbeispiels für ein erfindungsgemäßes Schienenfahrzeug mit zentral gesteuerten Batteriemodulen ohne eigene DC/DC-Wandler,
- Figur 5: in einer schematischen Ansicht Bestandteile eines Ausführungsbeispiels für ein erfindungsgemäßes Schienenfahrzeug mit einer Traktionsbatterieeinheit, die dezentral arbeitende Batteriezweige mit jeweils eigenen DC/DC-Wandlern umfasst,
- Figur 6: in einer schematischen Ansicht Bestandteile eines Ausführungsbeispiels für ein erfindungsgemäßes Schienenfahrzeug mit einer Traktionsbatterieeinheit, die dezentral arbeitende Batteriezweige ohne jeweils eigene DC/DC-Wandler umfasst,
- Figur 7: in einer schematischen Ansicht Bestandteile eines Ausführungsbeispiels für ein erfindungsgemäßes Schienenfahrzeug mit einer Traktionsbatterieeinheit, die zentral gesteuerte Batteriezweige mit eigenen DC/DC-Wandlern umfasst,
- Figur 8: in einer schematischen Ansicht Bestandteile eines Ausführungsbeispiels für ein erfindungsgemäßes Schienenfahrzeug mit einer Traktionsbatterieeinheit, die zentral gesteuerte Batteriezweige ohne eigene DC/DC-Wandler umfasst,
- Figur 9: anhand des Ausführungsbeispiels gemäß Figur 1 beispielhaft Batteriemodule mit betriebsartabhängig arbeitenden Kühleinrichtungen und betriebsartabhängig arbeitenden Steuergeräten, und
- Figur 10: anhand des Ausführungsbeispiels gemäß Figur 5 beispielhaft Batteriezweige mit betriebsartabhängig arbeitenden Kühleinrichtungen und betriebsartabhängig arbeitenden Steuergeräten.

In den Figuren werden der Übersicht halber für identische oder vergleichbare Komponenten stets dieselben Bezugszeichen verwendet.

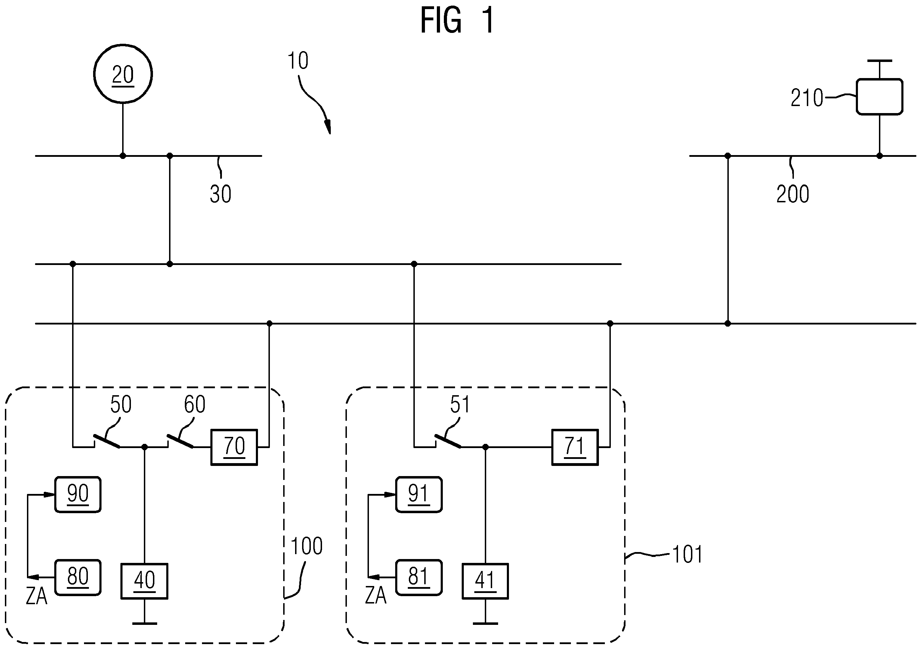

Die Figur 1 zeigt Bestandteile eines Ausführungsbeispiels für ein erfindungsgemäßes Schienenfahrzeug 10, das ein oder mehrere Antriebe 20 aufweist. Die Antriebe 20 werden elektrisch von einem Traktionsnetz 30 gespeist, bei dem es sich vorzugsweise um ein Hochspannungsgleichstromnetz handelt. Die nominelle Betriebsspannung des Traktionsnetzes 30 kann beispielsweise 1.000 Volt betragen.

Das Traktionsnetz 30 kann - über aus Gründen der Übersicht nicht gezeigte Stromabnehmer (z. B. Pantographen) - entweder direkt oder über nicht gezeigte DC/DC-Wandler mit einem ebenfalls aus Gründen der Übersicht nicht gezeigten streckenseitigen Gleichspannungsenergieversorgungsnetz oder über Transformatoren und nachgeschaltete Umrichter mit einem streckenseitigen Wechselspannungsenergieversorgungsnetz in Verbindung stehen.

Zur elektrischen Stützung der Spannung des Traktionsnetzes 30, zur Energieaufnahme im Falle eines Bremsbetriebs des Schienenfahrzeugs und/oder zur Speisung der Antriebe 20 im Falle eines Ausfalls der externen Energieversorgung, beispielsweise bei Befahren einer nichtelektrifizierten Strecke, ist eine erste Batterie 40 vorgesehen, die über einen ersten Traktionsnetzschalter 50 mit dem Traktionsnetz 30 verbindbar ist.

Wie weiter unten noch näher im Detail beschrieben wird, ist der erste Traktionsnetzschalter 50 im Normalbetrieb der ersten Batterie 40 geschlossen, sodass die erste Batterie 40 mit dem Traktionsnetz 30 verbunden ist; in einem Sonderbetrieb wird der erste Traktionsnetzschalter 50 geöffnet, sodass die erste Batterie 40 vom Traktionsnetz 30 getrennt wird.

Die erste Batterie 40 ist über einen batterieindividuell zugeordneten bzw. batterieeigenen Bordnetzschalter 60 und einen batterieindividuell zugeordneten bzw. batterieeigenen ersten DC/DC-Wandler 70 außerdem mit einem Bordnetz 200 des Schienenfahrzeugs 10 verbunden. Bei dem Bordnetz 200 handelt es sich vorzugsweise um ein Niederspannungsgleichstromnetz, das eine kleinere Spannung als das Traktionsnetz 30, beispielsweise eine Bordnetzspannung von 100 Volt, aufweist.

Die Bordnetzspannung des Bordnetzes 200 kann durch eine oder mehrere Bordnetzbatterien 210 gestützt werden; solche Bordnetzbatterien 210 sind vorteilhaft, aber nicht zwingend nötig.

Die erste Batterie 40 wird von einer batterieindividuell zugeordneten bzw. batterieeigenen ersten Überwachungseinrichtung 80 überwacht, die den Zustand, insbesondere den Alterungszustand der ersten Batterie 40, erfasst und ausgangsseitig eine Zustandsangabe ZA erzeugt, die die Arbeitsfähigkeit und/oder den jeweiligen Alterungszustand der ersten Batterie 40 angibt.

Der ersten Überwachungseinrichtung 80 nachgeordnet ist eine batterieindividuell zugeordnete bzw. batterieeigene erste Steuereinrichtung 90, die mit dem ersten Traktionsnetzschalter 50 und dem Bordnetzschalter 60 in Verbindung steht und diese öffnen oder schließen kann. Die erste Steuereinrichtung 90 wird in Abhängigkeit von der Zustandsangabe ZA der ersten Überwachungseinrichtung 80 den ersten Traktionsnetzschalter 50 und den Bordnetzschalter 60 in die jeweils vorteilhafte Schaltposition bringen.

Konkret wird die erste Steuereinrichtung 60 den ersten Traktionsnetzschalter 50 schließen bzw. geschlossen halten und den Bordnetzschalter 60 öffnen bzw. geöffnet halten, solange die Zustandsangabe ZA der ersten Überwachungseinrichtung 80 anzeigt, dass die erste Batterie 40 vorgegebene Arbeitskriterien erfüllt, insbesondere einen vorgegebenen maximalen Alterungszustand noch nicht erreicht hat. Die erste Batterie arbeitet in diesem Zustand ausschließlich traktionsnetzbezogen.

Anderenfalls, wenn die Zustandsangabe ZA der ersten Überwachungseinrichtung 80 anzeigt, dass die erste Batterie 40 nicht mehr ausreichend arbeitsfähig, insbesondere überaltert ist und zur Zusammenarbeit mit dem Traktionsnetz 30 nicht mehr geeignet ist bzw. die dafür benötigten Spezifikationen nicht mehr erfüllt, so wird die erste Steuereinrichtung 90 den ersten Traktionsnetzschalter 50 öffnen und damit die erste Batterie 40 vom Traktionsnetz 30 trennen. Die erste Batterie 40 hat somit ihre Funktion als traktionsnetzbezogene Einheit verloren.

Dennoch kann die erste Batterie 40 weiter verwendet werden, nämlich beispielsweise zum Stützen der Bordnetzspannung des Bordnetzes 200. Zu diesem Zweck wird die erste Steuereinrichtung 90 den Bordnetzschalter 60 schließen und damit die nötige Verbindung zwischen der ersten Batterie 40 und dem Bordnetz 200 herstellen.

Bei dem Ausführungsbeispiel gemäß Figur 1 sind die erste Batterie 40, der erste Traktionsnetzschalter 50, der Bordnetzschalter 60, der erste DC/DC-Wandler 70, die erste Überwachungseinrichtung 80 und die erste Steuereinrichtung 90 als eine gemeinsame Baueinheit in Form eines ersten Batteriemoduls 100 ausgeführt.

Das Schienenfahrzeug 10 gemäß Figur 1 weist darüber hinaus eine zweite Batterie 41 auf, die über einen batterieindividuell zugeordneten bzw. batterieeigenen Traktionsnetzschalter 51, nachfolgend zweiter Traktionsnetzschalter genannt, mit dem Traktionsnetz 30 verbunden ist bzw. verbindbar ist. Darüber hinaus steht die zweite Batterie 41 über einen batterieindividuell zugeordneten bzw. batterieeigenen DC/DC-Wandler 71, nachfolgend zweiter DC/DC-Wandler genannt, mit dem Bordnetz 200 in Verbindung. Die zweite Batterie 41 ist darüber hinaus mit einer batterieindividuell zugeordneten bzw. batterieeigenen Überwachungseinrichtung 81, nachfolgend zweite Überwachungseinrichtung genannt, verbunden, die den jeweiligen Zustand, insbesondere Alterungszustand, der zweiten Batterie 41 überwacht und eine entsprechende Zustandsangabe ZA erzeugt. Der zweiten Überwachungseinrichtung 81 nachgeordnet ist eine batterieindividuell zugeordnete bzw. batterieeigene Steuereinrichtung 91, nachfolgend zweite Steuereinrichtung genannt, die in Abhängigkeit von der Zustandsangabe ZA der zweiten Überwachungseinrichtung 81 den zweiten Traktionsnetzschalter 51 öffnet oder schließt.

Vorteilhaft ist es, wenn die zweite Steuereinrichtung 91 den zweiten Traktionsnetzschalter 51 geschlossen lässt, solange die Zustandsangabe ZA der zweiten Überwachungseinrichtung 81 anzeigt, dass die zweite Batterie 41 zur Verbindung mit dem Traktionsnetz 30 vorgegebene Spezifikationen erfüllt bzw. nicht überaltert ist.

Anderenfalls, wenn die Zustandsangabe ZA der zweiten Überwachungseinrichtung 81 eine entsprechende Arbeitsfähigkeit der zweiten Batterie 41 nicht mehr anzeigt, wird die Steuereinrichtung 91 den zweiten Traktionsnetzschalter 51 öffnen und somit die zweite Batterie 41 vom Traktionsnetz 30 trennen.

Die zweite Batterie 41 ist im Unterschied zu der ersten Batterie 40 dauerhaft mit dem Bordnetz 200 über den DC/DC-Wandler 71 verbunden. Es fehlt also an einem der zweiten Batterie 41 individuell zugeordneten Bordnetzschalter 60, wie er für die erste Batterie 40 bzw. bei dem ersten Batteriemodul 100 vorgesehen ist.

Die zweite Batterie 41, der zweite Traktionsnetzschalter 51, der zweite DC/DC-Wandler 71, die zweite Überwachungseinrichtung 81 und die zweite Steuereinrichtung 91 sind vorzugsweise in einer eigenen Baueinheit bzw. in einem eigenen Batteriemodul 101, nachfolgend zweites Batteriemodul genannt, untergebracht.

Bei dem Ausführungsbeispiel gemäß Figur 1 weist das Schienenfahrzeug 10 also zwei Batterien 40 und 41 auf, von denen die zweite dauerhaft mit dem Bordnetz 200 in Verbindung steht und die andere, die erste, nur bei geschlossenem Bordnetzschalter 60 mit dem Bordnetz 200 in Verbindung steht und anderenfalls nicht.

Das Schienenfahrzeug 10 kann alternativ auch nur eine Batterie aufweisen, sei es die erste Batterie 40, die über den Bordnetzschalter 60 mit dem Bordnetz 200 in Verbindung steht, oder die zweite Batterie 41, die dauerhaft mit dem Bordnetz 200 in Verbindung steht.

Auch ist es möglich, das Schienenfahrzeug 10 mit mehr als zwei Batterien auszustatten, seien es Batterien mit zugeordnetem Bordnetzschalter wie die erste Batterie 40, oder Batterien ohne zugeordneten Bordnetzschalter wie die zweite Batterie 41; selbstverständlich können - wie in Figur 1 gezeigt - beide Arten an Batterieverschaltungen auch kombiniert werden.

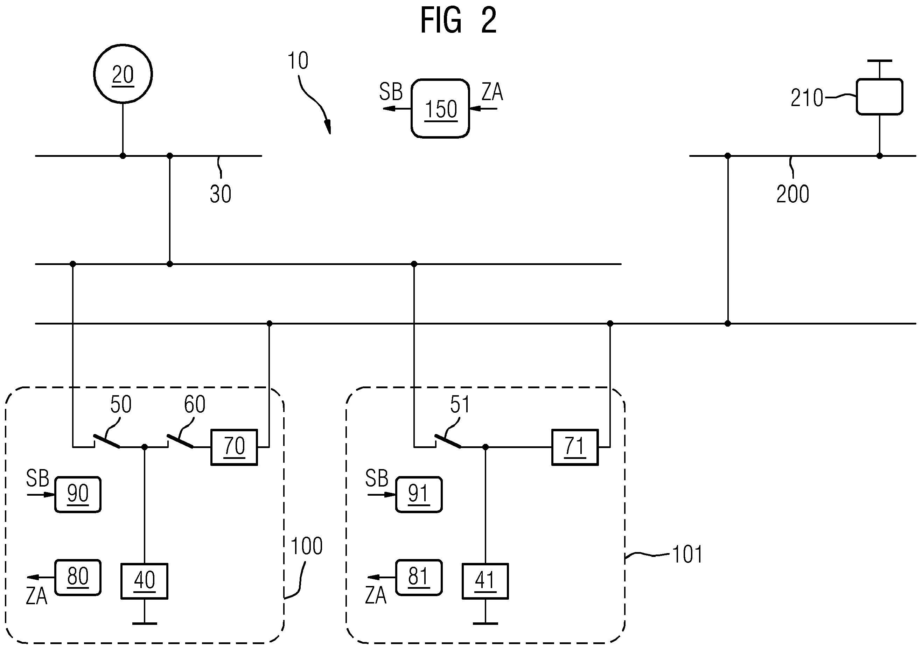

Bei dem Ausführungsbeispiel gemäß Figur 1 arbeiten die Batteriemodule 100 und 101 autark, da die jeweiligen Überwachungseinrichtungen 80 und 81 jeweils individuell die zugeordneten Steuereinrichtungen 90 und 91 mittels der Zustandsangabe ZA ansteuern. Alternativ ist es möglich, dass eine Zentraleinheit 150 vorgesehen ist, die ein zentrales Management der Batterien 40 und 41 vorsieht. Eine solche Ausgestaltung ist in Figur 2 gezeigt.

In der Figur 2 ist erkennbar, dass die Überwachungseinrichtungen 80 und 81 nicht direkt mit den Steuereinrichtungen 90 und 91 in Verbindung stehen und diese direkt beeinflussen, sondern stattdessen ihre jeweilige Zustandsangabe ZA zur Zentraleinheit 150 übermitteln. Die Zentraleinheit 150 wertet die Zustandsangaben ZA aus und erzeugt ausgangsseitig Steuerbefehle SB für die Steuereinrichtungen 90 und 91, wenn die Zustandsangaben ZA der Überwachungseinrichtungen 80 und 81 ein Öffnen der Traktionsnetzschalter 50 bzw. 51 vorteilhaft erscheinen lassen.

Im Falle eines gewünschten Öffnens des Traktionsnetzschalters 50 der ersten Batterie 40 wird die Zentraleinheit 150 außerdem einen zusätzlichen Steuerbefehl SB an die Steuereinrichtung 90 senden, damit letztgenannte ein Schließen des Bordnetzschalters 60 vornimmt.

Im Übrigen gelten die obigen Erläuterungen im Zusammenhang mit der Figur 1 bei dem Ausführungsbeispiel gemäß Figur 2 entsprechend.

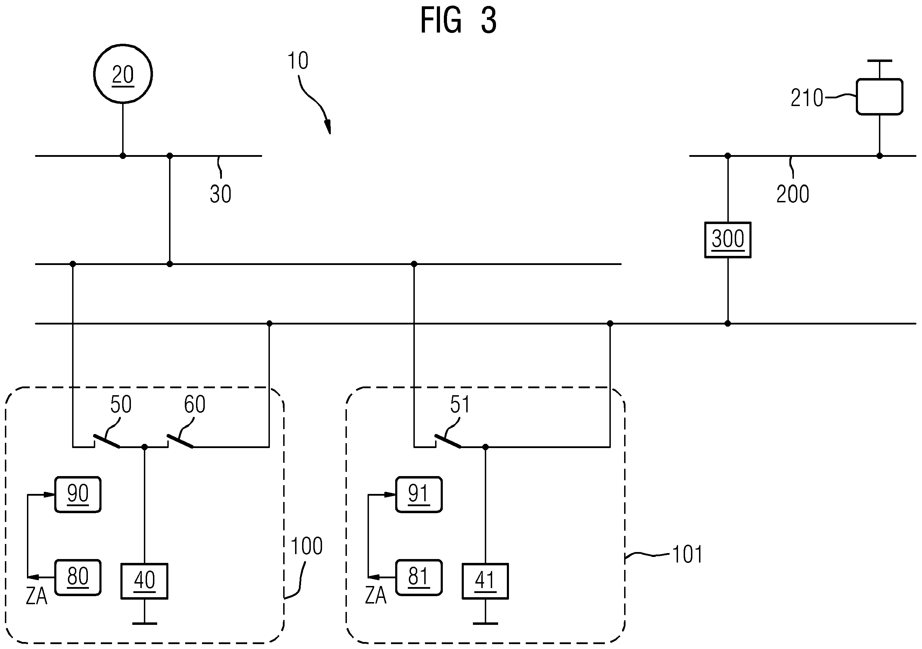

Die Figur 3 zeigt eine Ausführungsvariante des Ausführungsbeispiels gemäß Figur 1. Bei dieser Ausführungsvariante sind den Batterien 40 und 41 bzw. den Batterieeinheiten 100 und 101 nicht eigene DC/DC-Wandler 70 bzw. 71 zugeordnet; stattdessen ist ein zentraler DC/DC-Wandler 300 vorgesehen, der dauerhaft mit der Batterie 41 und bei geschlossenem Bordnetzschalter 60 auch mit der Batterie 40 in Verbindung steht.

Im Unterschied zu dem Ausführungsbeispiel gemäß Figur 1 müssen die Batteriemodule 100 und 101 also nicht mit moduleigenen DC/DC-Wandlern 70 bzw. 71 ausgestattet werden und sind somit besonders kostengünstig.

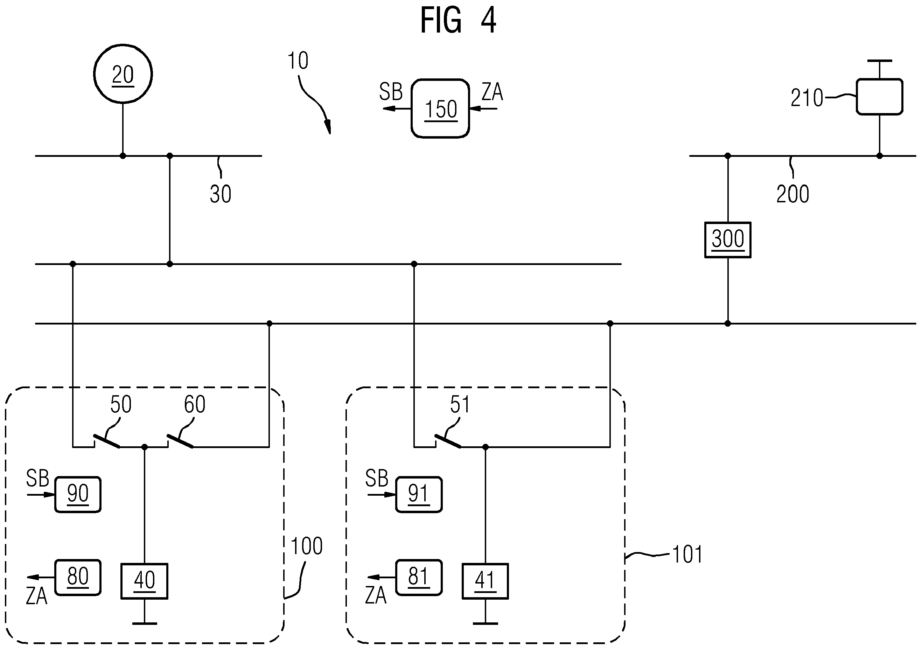

Die Figur 4 zeigt eine Ausführungsvariante des Ausführungsbeispiels gemäß Figur 2. Bei dieser Ausführungsvariante ist zusätzlich ein zentraler DC/DC-Wandler 300 vorgesehen, wie es auch bei dem Ausführungsbeispiel gemäß Figur 3 der Fall ist. Demgemäß können die batteriemoduleigenen DC/DC-Wandler 70 und 71, die bei den Batteriemodulen 100 und 101 gemäß Figur 2 vorhanden sind, fehlen. Im Übrigen gelten die obigen Ausführungen im Zusammenhang mit den Figuren 1 bis 3 entsprechend.

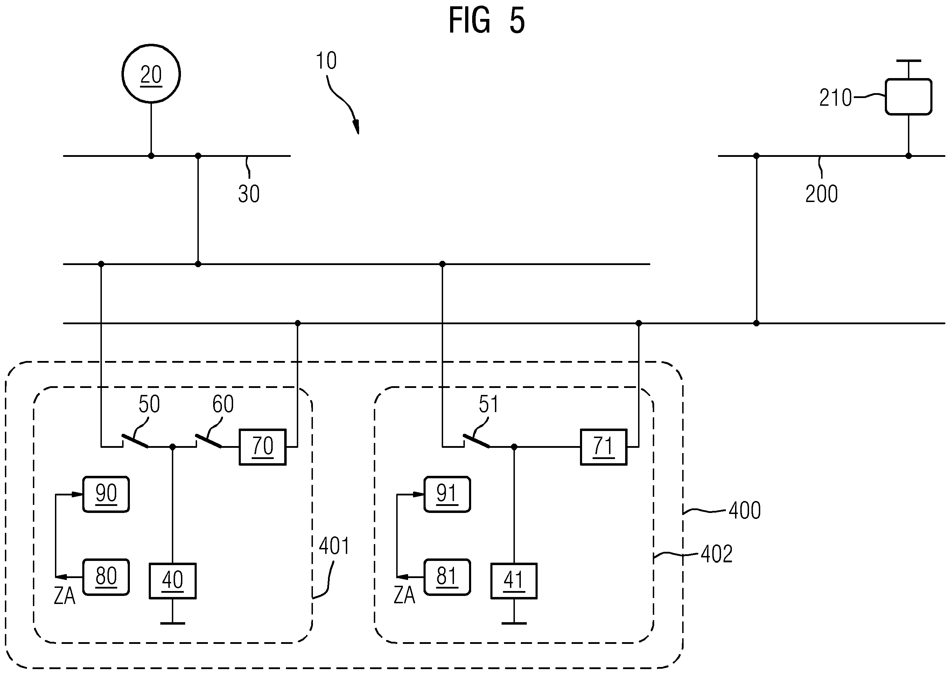

Die Figur 5 zeigt ein Ausführungsbeispiel für ein Schienenfahrzeug 10, das mit einer Traktionsbatterieeinheit 400 ausgestattet ist, die zwei oder mehr Batteriezweige aufweist, von denen in der Figur 5 zwei gezeigt und mit den Bezugszeichen 401 und 402 gekennzeichnet sind.

Bei dem Ausführungsbeispiel gemäß Figur 5 weist der in der Figur 5 linke Batteriezweig 401 eine Batterie 40, einen der Batterie 40 zugeordneten Traktionsnetzschalter 50, einen Bordnetzschalter 60, einen DC/DC-Wandler 70, eine Überwachungseinrichtung 80 und eine Steuereinrichtung 90 auf. Die batteriezweigeigenen Komponenten 40, 50, 60, 70, 80 und 90 des Batteriezweigs 401 können mit den oben im Zusammenhang mit der Figur 1 beschriebenen Komponenten 40 bis 90 identisch sein, sodass die obigen Ausführungen im Zusammenhang mit der Figur 1 für den Batteriezweig 401 der Traktionsbatterie 400 entsprechend gelten; diesbezüglich sei also auf die obigen Ausführungen verwiesen.

Bei dem Ausführungsbeispiel gemäß Figur 5 weist der in der Figur 5 rechte Batteriezweig 402 eine Batterie 41, einen der Batterie 41 zugeordneten Traktionsnetzschalter 51, einen DC/DC-Wandler 71, eine Überwachungseinrichtung 81 und eine Steuereinrichtung 91 auf. Die batteriezweigeigenen Komponenten 41, 51, 71, 81 und 91 des Batteriezweigs 401 können mit den oben im Zusammenhang mit der Figur 1 beschriebenen Komponenten 41, 51, 71, 81 und 91 identisch sein, sodass die obigen Ausführungen im Zusammenhang mit der Figur 1 für den Batteriezweig 402 der Traktionsbatterie 400 entsprechend gelten; diesbezüglich sei also auf die obigen Ausführungen verwiesen.

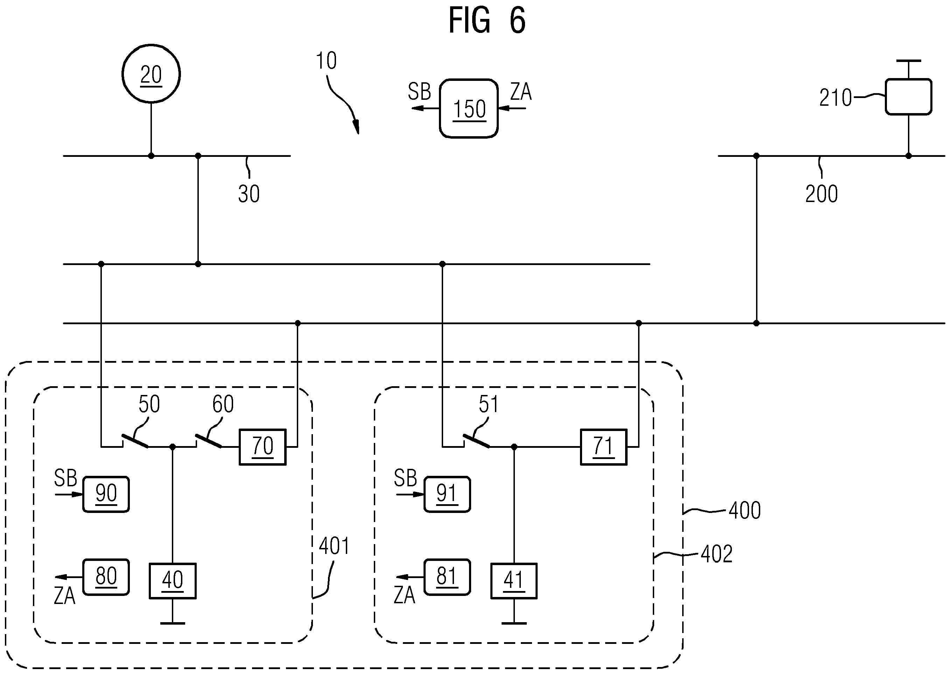

Bei dem Ausführungsbeispiel gemäß Figur 5 arbeiten die Batteriezweige 401 und 402 autark, da die jeweiligen Überwachungseinrichtungen 80 und 81 jeweils individuell die zugeordneten Steuereinrichtungen 90 und 91 mittels der Zustandsangabe ZA ansteuern. Alternativ ist es möglich, dass eine Zentraleinheit 150 vorgesehen ist, die ein zentrales Management der Batteriezweige 401 und 402 vorsieht. Eine solche Ausgestaltung ist in Figur 6 gezeigt.

In der Figur 6 ist erkennbar, dass die Überwachungseinrichtungen 80 und 81 nicht direkt mit den Steuereinrichtungen 90 und 91 in Verbindung stehen und diese direkt beeinflussen, sondern stattdessen ihre jeweilige Zustandsangabe ZA zur Zentraleinheit 150 übermitteln. Die Zentraleinheit 150 wertet die Zustandsangaben ZA aus und erzeugt ausgangsseitig Steuerbefehle SB für die Steuereinrichtungen 90 und 91, wenn die Zustandsangaben ZA der Überwachungseinrichtungen 80 und 81 ein Öffnen der Traktionsnetzschalter 50 bzw. 51 vorteilhaft erscheinen lassen.

Im Falle eines gewünschten Öffnens des Traktionsnetzschalters 50 des ersten Batteriezweigs 401 wird die Zentraleinheit 150 außerdem einen zusätzlichen Steuerbefehl SB an die Steuereinrichtung 90 senden, damit letztgenannte ein Schließen des Bordnetzschalters 60 vornimmt.

Im Übrigen gelten die obigen Erläuterungen im Zusammenhang mit der Figur 5 bei dem Ausführungsbeispiel gemäß Figur 6 entsprechend.

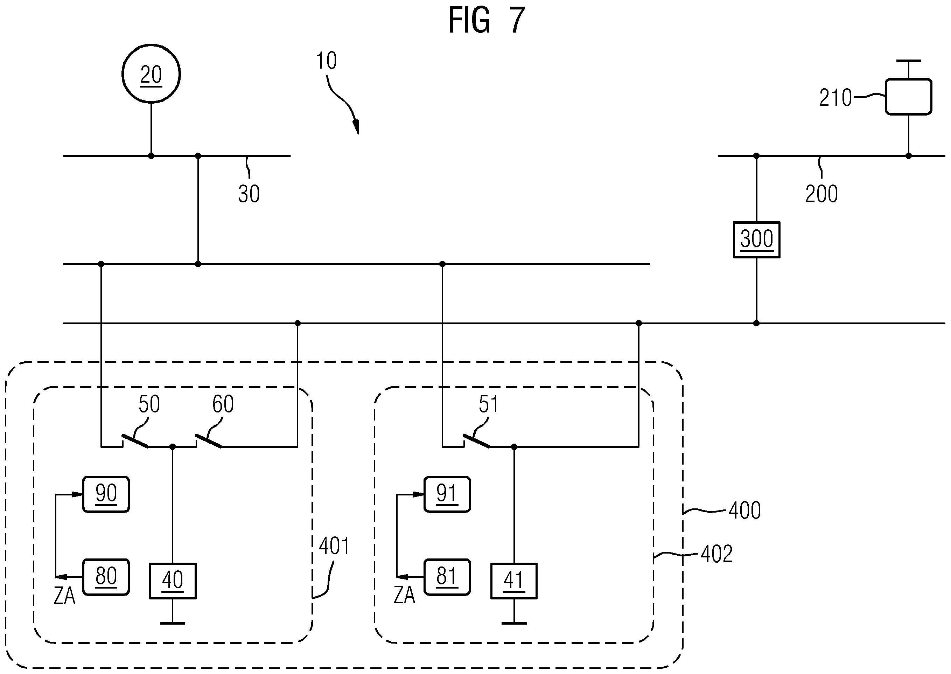

Die Figur 7 zeigt eine Ausführungsvariante des Ausführungsbeispiels gemäß Figur 5. Bei dieser Ausführungsvariante sind den Batteriezweigen 401 und 402 nicht eigene DC/DC-Wandler 70 bzw. 71 zugeordnet; stattdessen ist ein zentraler DC/DC-Wandler 300 vorgesehen, der dauerhaft mit dem zweiten Batteriezweig 402 und - bei geschlossenem Bordnetzschalter 60 - mit dem ersten Batteriezweig 401 in Verbindung steht.

Im Unterschied zu dem Ausführungsbeispiel gemäß Figur 5 müssen die Batteriezweige 401 und 402 also nicht mit zweigeigenen DC/DC-Wandlern 70 bzw. 71 ausgestattet werden und sind somit besonders kostengünstig.

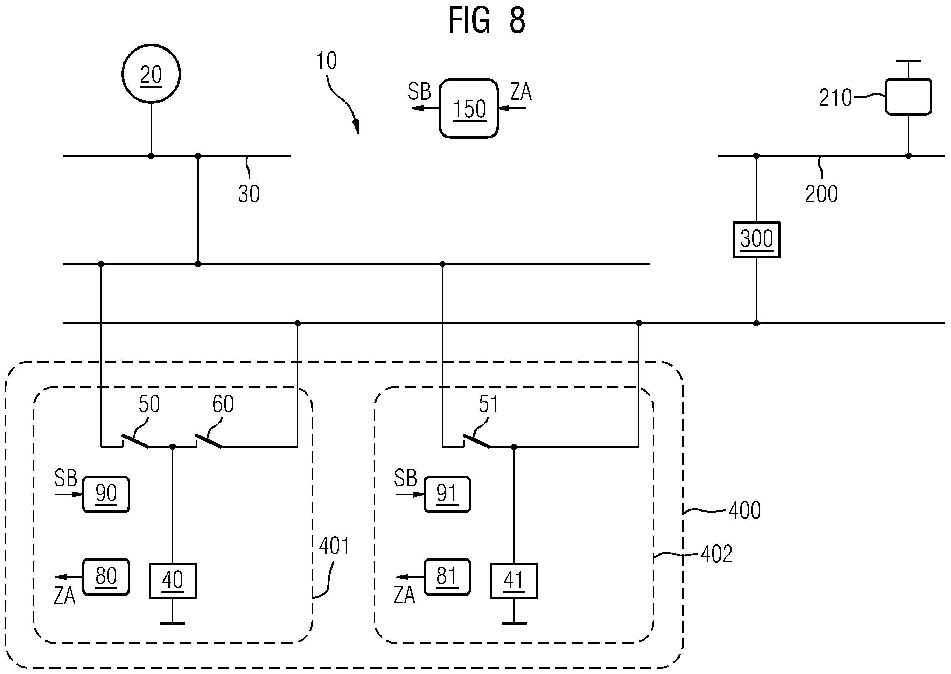

Die Figur 8 zeigt eine Ausführungsvariante des Ausführungsbeispiels gemäß Figur 6. Bei dieser Ausführungsvariante ist ein zusätzlicher zentraler DC/DC-Wandler 300 vorgesehen, wie es auch bei dem Ausführungsbeispiel gemäß Figur 7 vorhanden ist. Demgemäß können die batteriezweigeigenen DC/DC-Wandler 70 und 71, die bei den Batteriezweigen 401 und 402 gemäß Figur 6 vorhanden sind, fehlen. Im Übrigen gelten die obigen Ausführungen im Zusammenhang mit den Figuren 5 bis 7 entsprechend.

Bei den Ausführungsbeispielen gemäß Figur 1 bis 8 könnend die Batterien 40 und 41 bzw. die Batteriezweige 401 und 402 jeweils eine Vielzahl an in Reihe und/oder parallel geschalteten Batteriezellen, die aus Gründen der Übersicht in den Figuren nicht im Einzelnen dargestellt sind, aufweisen oder aus diesen bestehen.

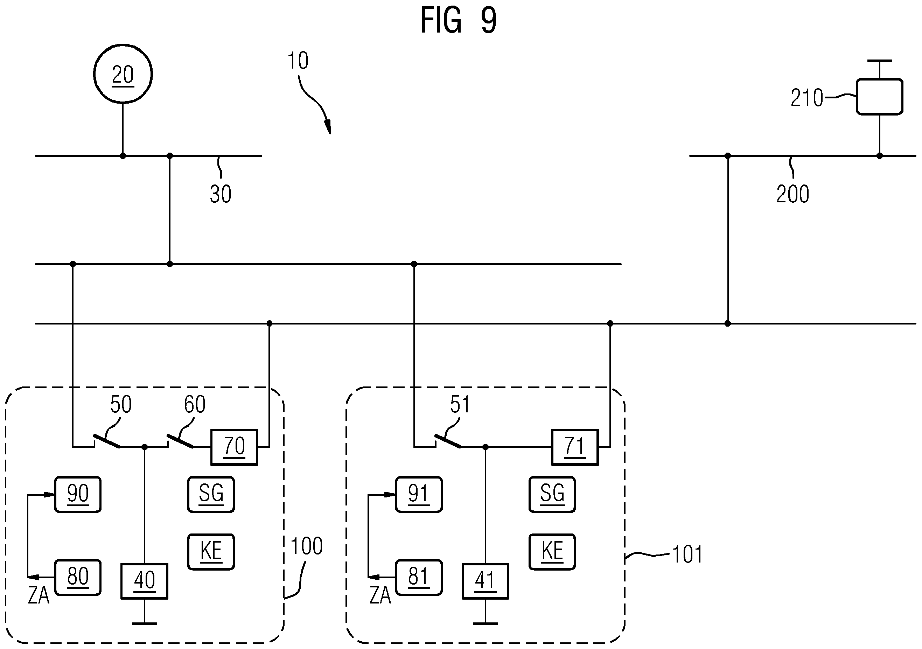

Bei den Batteriemodulen 100 und 101 gemäß den Figuren 1 bis 4 ist es vorteilhaft, wenn diese jeweils mit Kühleinrichtungen KE ausgestattet sind, wie beispielhaft in der Figur 9 anhand der Ausführungsvariante gemäß Figur 1 gezeigt ist. Die Steuerung der Kühleinrichtungen KE kann in vorteilhafter Weise durch die Überwachungseinrichtungen 80 bzw. 81 erfolgen. Sind die Traktionsnetzschalter 50 bzw. 51 geschlossen und werden die Batterien 100 und 101 traktionsnetzseitig betrieben, so werden die Batterien 100 und 101 mittels der Kühleinrichtungen KE vorzugsweise mehr gekühlt als bei geöffneten Traktionsnetzschaltern 50 bzw. 51 und Trennung vom Traktionsnetz 30.

Bei den Batteriemodulen 100 und 101 ist es außerdem vorteilhaft, wenn Steuergeräte SG, die die Arbeitsweise, also beispielsweise das Laden und Entladen der Batterien 40 und 41, steuern und kontrollieren, für den Normalbetrieb (also mit Traktionsnetzverbindung) einen anderen Steuermodus aufweisen als im Sonderbetriebsmodus (also ohne Traktionsnetzverbindung). Werden die Traktionsnetzschalter 50 bzw. 51 von dem Normalbetrieb in den Sonderbetrieb umgeschaltet, so wird der Steuermodus der Steuergeräte SG vorzugsweise ebenfalls umgeschaltet, beispielsweise mittels der Überwachungseinrichtungen 80 bzw. 81.

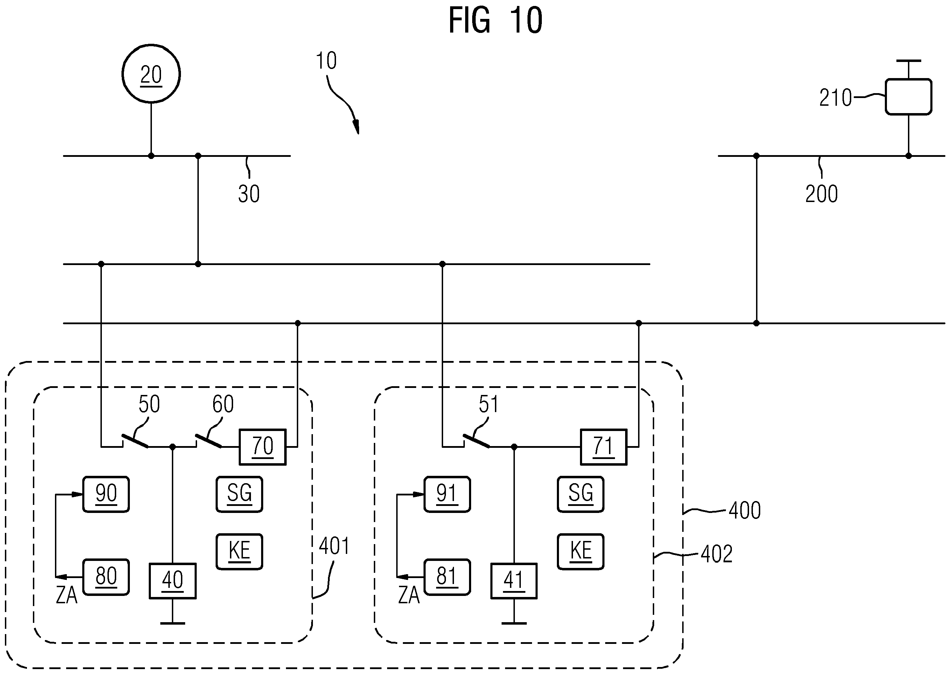

Auch bei den Batteriezweigen 401 und 402 der Traktionsnetzbatterieeinheit 400 gemäß den Figuren 5 bis 8 ist es vorteilhaft, wenn diese jeweils mit betriebsartabhängig arbeitenden Kühleinrichtungen KE und Steuergeräten SG, die betriebsartabhängige Steuermodi aufweisen, ausgestattet sind, wie beispielhaft in der Figur 10 anhand der Ausführungsvariante gemäß Figur 5 gezeigt ist. Die obigen Ausführungen im Zusammenhang mit der Figur 9 gelten hier entsprechend.

Bei den oben anhand der Figuren näher beschriebenen Ausführungsbeispielen ist eine technische Trennung zwischen Traktionsbatterien und Bordnetzbatterien aufgehoben. Es wird dadurch beispielsweise möglich, Traktionsbatterien als Bordnetzbatterien zu verwenden, beispielsweise wenn einige Zellen der Batterie nicht mehr funktionsfähig sind bzw. nicht mehr zum Zweck der Versorgung der Traktion genügen.

Es besteht also die Möglichkeit einer Wiederverwendung von Anteilen einer Traktionsbatterie als Bordnetzbatterie durch softwaretechnische Umschaltung. Mit anderen Worten kann eine Traktionsbatterie durch Umschaltung von der Traktion getrennt und nachfolgend als Versorgungsquelle für das Bordnetz geschaltet werden. Zugleich werden vorzugsweise die zugehörigen Steuerungs- und Kühleinrichtungen für die betroffenen Anteile der Batterie umgeschaltet.

Da eine Traktionsbatterieeinheit aus mehreren Versorgungszweigen bestehen kann, ist es damit möglich:
- einen Versorgungszweig als Bordnetzversorgung zu verwenden,
- bei Defekten oder Störungen des aktuellen Bordnetzversorgungszweiges auf einen anderen Zweig zur Bordnetzversorgung umzuschalten, und/oder
- bei Defekten oder Leistungsminderung eines Traktionsversorgungszweigs diesen Zweig als Bordnetzversorgung zu verwenden und einen bisher zur Bordnetzversorgung verwendeten Zweig als Traktionsversorgung einzusetzen.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen, der durch die angehängten Ansprüche definiert ist.

### Bezugszeichenliste

- 10: Schienenfahrzeug
- 20: Antrieb
- 30: Traktionsnetz
- 40: erste Batterie
- 41: zweite Batterie
- 50: erster Traktionsnetzschalter
- 51: zweiter Traktionsnetzschalter
- 60: Bordnetzschalter
- 70: erster DC/DC-Wandler
- 71: zweiter DC/DC-Wandler
- 80: erste Überwachungseinrichtung
- 81: zweite Überwachungseinrichtung
- 90: erste Steuereinrichtung
- 91: zweite Steuereinrichtung
- 100: erstes Batteriemodul
- 101: zweites Batteriemodul
- 150: Zentraleinheit
- 200: Bordnetz
- 210: Bordnetzbatterie
- 300: zentraler DC/DC-Wandler
- 400: Traktionsbatterieeinheit
- 401: Batteriezweig
- 402: Batteriezweig

- KE: Kühleinrichtung
- SB: Steuerbefehl
- SG: Steuergerät
- ZA: Zustandsangabe

## Patentansprüche

1. Schienenfahrzeug (10), mit
- zumindest einem elektrischen Traktionsnetz (30), mit dem sich zumindest ein Antrieb (20) des Schienenfahrzeugs (10) mit elektrischer Energie speisen lässt,
- zumindest einem elektrischen Bordnetz (200), mit dem sich sonstige Komponenten des Schienenfahrzeugs (10) speisen lassen, und
- zumindest einer Batterie (40, 41),
wobei
das Schienenfahrzeug (10) derart ausgestaltet ist, dass es die Batterie (40, 41) in einem Normalbetrieb und einem Sonderbetrieb betreiben kann, wobei die Batterie (40, 41) im Normalbetrieb über mindestens einen batterieeigenen oder der Batterie (40, 41) zugeordneten Traktionsnetzschalter (50, 51) mit dem Traktionsnetz (30) verbunden wird und im Sonderbetrieb durch den Traktionsnetzschalter (50, 51) von dem Traktionsnetz (30) getrennt wird, **gekennzeichnet dadurch, dass** die Batterie (40, 41) im Falle einer bereits während des Normalbetriebs bestehenden Verbindung zum Bordnetz (200) im Sonderbetrieb mit dem Bordnetz (200) verbunden bleibt und andernfalls mit dem Bordnetz (200) verbunden wird, und
das Schienenfahrzeug (10) eine Überwachungseinrichtung (80, 81) aufweist, die den Zustand der Batterie (40, 41) erfasst und die Batterie (40, 41) im Normalbetrieb betreibt und mit dem Traktionsnetz (30) verbunden lässt, solange die Batterie (40, 41) ein vorgegebenes Zustandskriterium erfüllt, und die Batterie (40, 41) im Sonderbetrieb betreibt und von dem Traktionsnetz (30) trennt, sobald der Zustand der Batterie (40, 41) das vorgegebene Zustandskriterium nicht mehr erfüllt.

2. Schienenfahrzeug (10) nach Anspruch 1,
**dadurch gekennzeichnet, dass**
die Überwachungseinrichtung (80, 81) den Alterungszustand der Batterie (40, 41) erfasst.

3. Fahrzeug nach einem der voranstehenden Ansprüche,
**dadurch gekennzeichnet, dass**
- die Batterie (40) oder zumindest eine der Batterien (40) im Normalbetrieb durch einen batterieeigenen oder der Batterie (40) zugeordneten Bordnetzschalter (60) von dem Bordnetz (200) getrennt ist und im Sonderbetrieb mit dem batterieeigenen oder der Batterie (40) zugeordneten Bordnetzschalter (60) mit dem elektrischen Bordnetz (200) verbunden wird.

4. Schienenfahrzeug (10) nach einem der voranstehenden Ansprüche,
**dadurch gekennzeichnet, dass**
die Batterie (40, 41) oder zumindest eine der Batterien (40, 41) bereits im Normalbetrieb mit dem Bordnetz (200) über zumindest eine Leitung fest verbunden ist und im Sonderbetrieb mit dem elektrischen Bordnetz (200) verbunden bleibt.

5. Schienenfahrzeug (10) nach einem der voranstehenden Ansprüche,
**dadurch gekennzeichnet, dass**
- das Schienenfahrzeug (10)derart ausgestaltet ist, dass es jede Batterie (40, 41), die im Normalbetrieb mit dem Traktionsnetz (30) verbunden ist batterieindividuell im Normalbetrieb oder im Sonderbetrieb betreiben kann,
- wobei jede der Batterien (40, 41) im Normalbetrieb über mindestens einen batterieeigenen oder der Batterie (40, 41) zugeordneten Traktionsnetzschalter (50, 51) mit dem Traktionsnetz (30) verbunden wird und im Sonderbetrieb durch den jeweiligen Traktionsnetzschalter (50, 51) von dem Traktionsnetz (30) getrennt wird.

6. Schienenfahrzeug (10) nach Anspruch 5,
**dadurch gekennzeichnet, dass**
- das Schienenfahrzeug (10)für zumindest eine der Batterien (40, 41), vorzugsweise jeweils für jede Batterie (40, 41), eine batterieeigene Überwachungseinrichtung (80, 81) aufweist, die den Zustand, insbesondere den Alterungszustand, der jeweiligen Batterie (40, 41) erfasst und die Batterie (40, 41) im Normalbetrieb betreibt und mit dem Traktionsnetz (30) verbunden lässt, solange die Batterie (40, 41) ein vorgegebenes, insbesondere batterieindividuell vorgegebenes, Zustandskriterium erfüllt, und die Batterie (40, 41) im Sonderbetrieb betreibt und von dem Traktionsnetz (30) trennt, sobald der Zustand der Batterie (40, 41) das vorgegebene, insbesondere das batterieindividuell vorgegebene, Zustandskriterium nicht mehr erfüllt.

7. Schienenfahrzeug (10) nach einem der voranstehenden Ansprüche,
**dadurch gekennzeichnet, dass**
das Schienenfahrzeug (10)eine Zentraleinrichtung (150) aufweist, die mit Traktionsnetzschaltern (50, 51) zweier oder mehr Batterien (40, 41) in Verbindung steht und diese von dem Normalbetrieb in den Sonderbetrieb umschalten kann.

8. Schienenfahrzeug (10) nach einem der voranstehenden Ansprüche,
**dadurch gekennzeichnet, dass**
das Schienenfahrzeug (10) eine Zentraleinrichtung (150) aufweist, die mit zwei oder mehr batterieeigenen Steuereinrichtungen (90, 91) in Verbindung steht und die Traktionsnetzschalter (50, 51) der jeweiligen Batterien (40, 41) unter Einbezug der batterieeigenen Steuereinrichtungen (90, 91) umschalten kann.

9. Schienenfahrzeug (10) nach einem der voranstehenden Ansprüche,
**dadurch gekennzeichnet, dass**
die Batterie (40, 41) einen Bestandteil eines Batteriezweigs (401, 402) einer zumindest zwei Batteriezweige (401, 402) aufweisenden Traktionsbatterieeinheit (400) des Fahrzeugs bildet.

10. Schienenfahrzeug (10) nach Anspruch 9,
**dadurch gekennzeichnet, dass**
- das Schienenfahrzeug (10) derart ausgestaltet ist, dass es jeden der Batteriezweige (401, 402) der Traktionsbatterieeinheit (400) zweigindividuell in dem Normalbetrieb und dem Sonderbetrieb betreiben kann,
- wobei jeder der Batteriezweige (401, 402) im Normalbetrieb über mindestens einen batteriezweigeigenen oder dem Batteriezweig (401, 402) zugeordneten Traktionsnetzschalter (50, 51) mit dem Traktionsnetz (30) verbunden wird und im Sonderbetrieb durch den Traktionsnetzschalter (50, 51) von dem Traktionsnetz (30) getrennt wird,
- wobei jeder der Batteriezweige (401, 402) im Falle einer bereits im Normalbetrieb bestehenden Verbindung zum Bordnetz (200) mit diesem verbunden bleibt und andernfalls mit dem Bordnetz (200) verbunden wird.

11. Schienenfahrzeug (10)nach einem der voranstehenden Ansprüche 9-10,
**dadurch gekennzeichnet, dass**
- das Schienenfahrzeug (10) für zumindest einen der, vorzugsweise jeweils jeden der Batteriezweige (401, 402) eine batteriezweigeigene Überwachungseinrichtung (80, 81) aufweist, die den Zustand, insbesondere den Alterungszustand, des jeweiligen Batteriezweigs (401, 402) erfasst und eine Zustandsangabe (ZA) erzeugt, die angibt, ob der jeweilige Batteriezweig (401, 402) das Zustandskriterium, das vorzugsweise batteriezweigindividuell ist, erfüllt oder nicht.

12. Schienenfahrzeug (10) nach Anspruch 11,
**dadurch gekennzeichnet, dass**
bei zumindest einem der, vorzugsweise jeweils jedem der Batteriezweige (401, 402) die batteriezweigeigene Überwachungseinrichtung (80, 81) mit einer batteriezweigeigenen Steuereinrichtung (90, 91) in Verbindung steht, die in Abhängigkeit von der Zustandsangabe (ZA) den jeweiligen Traktionsnetzschalter (50, 51) öffnet oder geschlossen lässt.

13. Schienenfahrzeug (10) nach einem der voranstehenden Ansprüche 11-12,
**dadurch gekennzeichnet, dass**
bei zumindest einem der, vorzugsweise jeweils jedem der Batteriezweige (401, 402) die batteriezweigeigene Überwachungseinrichtung (80, 81) mit einer Zentraleinrichtung (150) in Verbindung steht, die in Abhängigkeit von der Zustandsangabe (ZA) der Überwachungseinrichtung (80, 81) den jeweiligen Traktionsnetzschalter (50, 51) öffnet oder geschlossen lässt.

14. Schienenfahrzeug (10) nach einem der voranstehenden Ansprüche,
**dadurch gekennzeichnet, dass**
die Batterie (40, 41) oder ein mit diesem gebildetes Batteriemodul oder Batteriezweig (401, 402) mit einer betriebsartabhängig arbeitenden Kühleinrichtung (KE) ausgestattet ist, die die Batterie (40, 41) betriebsartabhängig, also abhängig vom Normalbetrieb oder Sonderbetrieb, unterschiedlich kühlt, und/oder mit einem betriebsartabhängig arbeitenden Steuergerät (SG) ausgestattet ist, das die Batterie (40, 41) betriebsartabhängig, also abhängig vom Normalbetrieb oder Sonderbetrieb, unterschiedlich steuert hierzu betriebsartabhängig unterschiedliche Steuermodi aufweist.

15. Verfahren zum Betreiben eines Schienenfahrzeugs (10), das ausgestattet ist mit:
- zumindest einem elektrischen Traktionsnetz (30), mit dem sich zumindest ein Antrieb (20) des Schienenfahrzeugs (10) mit elektrischer Energie speisen lässt,
- zumindest einem elektrischen Bordnetz (200), mit dem sich sonstige Komponenten des Schienenfahrzeugs (10) speisen lassen, und
- zumindest einer Batterie (40, 41),
wobei
- die Batterie (40, 41) wahlweise in einem Normalbetrieb oder einem Sonderbetrieb betrieben wird, wobei die Batterie (40, 41)
- im Normalbetrieb über mindestens einen batterieeigenen oder der Batterie (40, 41) zugeordneten Traktionsnetzschalter (50, 51) mit dem Traktionsnetz (30) verbunden wird und
- im Sonderbetrieb durch den Traktionsnetzschalter (50, 51) von dem Traktionsnetz (30) getrennt wird,
- **gekennzeichnet dadurch, dass** die Batterie (40, 41) im Sonderbetrieb im Falle einer bereits im Normalbetrieb bestehenden Verbindung zum Bordnetz (200) mit diesem verbunden bleibt und andernfalls mit dem Bordnetz (200) verbunden wird, und
- das Schienenfahrzeug (10) eine Überwachungseinrichtung (80, 81) aufweist, die den Zustand der Batterie (40, 41) erfasst und die Batterie (40, 41) im Normalbetrieb betreibt und mit dem Traktionsnetz (30) verbunden lässt, solange die Batterie (40, 41) ein vorgegebenes Zustandskriterium erfüllt, und die Batterie (40, 41) im Sonderbetrieb betreibt und von dem Traktionsnetz (30) trennt, sobald der Zustand der Batterie (40, 41) das vorgegebene Zustandskriterium nicht mehr erfüllt.

## Claims

1. Rail vehicle (10), with
- at least one electrical traction network (30), with which at least one drive (20) of the rail vehicle (10) can be fed electrical energy,
- at least one electrical on-board network (200), with which other components of the rail vehicle (10) can be fed, and
- at least one battery (40, 41),
wherein
the rail vehicle (10) is embodied in such a manner that it can operate the battery (40, 41) in a normal operation and a special operation, wherein the battery (40, 41) in normal operation is connected to the traction network (30) via at least one traction network switch (50, 51) that is dedicated for the battery or is assigned to the battery (40, 41), and in special operation is disconnected from the traction network (30) by the traction network switch (50, 51), **characterised in that** the battery (40, 41), in the event of a connection to the on-board network (200) already existing during normal operation, remains connected to the on-board network (200) in special operation and otherwise is connected to the on-board network (200), and
the rail vehicle (10) has a monitoring facility (80, 81), which detects the status of the battery (40, 41) and operates the battery (40, 41) in normal operation and has it connected to the traction network (30) as long as the battery (40, 41) fulfils a predefined status criterion, and operates the battery (40, 41) in special operation and disconnects it from the traction network (30) as soon as the status of the battery (40, 41) no longer fulfils the predefined status criterion.

2. Rail vehicle (10) according to claim 1,
**characterised in that**
the monitoring facility (80, 81) detects the aging status of the battery (40, 41).

3. Rail vehicle according to one of the preceding claims,
**characterised in that**
- the battery (40) or at least one of the batteries (40) in normal operation is disconnected from the on-board network (200) by an on-board network switch (60) that is dedicated for the battery or is assigned to the battery (40), and in special operation is connected to the electrical on-board network (200) using the on-board network switch (60) that is dedicated for the battery or is assigned to the battery (40) .

4. Rail vehicle (10) according to one of the preceding claims, **characterised in that**
the battery (40, 41) or at least one of the batteries (40, 41) is already connected to the on-board network (200) on a permanent basis via at least one line in normal operation and remains connected to the electrical on-board network (200) in special operation.

5. Rail vehicle (10) according to one of the preceding claims, **characterised in that**
- the rail vehicle (10) is embodied in such a manner that it can operate any battery (40, 41), which in normal operation is connected to the traction network (30), in normal operation or in special operation on a battery-specific basis,
- wherein each of the batteries (40, 41) in normal operation is connected to the traction network (30) via at least one traction network switch (50, 51) that is dedicated for the battery or is assigned to the battery (40, 41), and in special operation is disconnected from the traction network (30) by the respective traction network switch (50, 51).

6. Rail vehicle (10) according to claim 5,
**characterised in that**
- the rail vehicle (10), for at least one of the batteries (40, 41), preferably for each battery (40, 41) in each case, has a monitoring facility (80, 81) dedicated for the battery, which detects the status, in particular the aging status, of the respective battery (40, 41) and operates the battery (40, 41) in normal operation and has it connected to the traction network (30) as long as the battery (40, 41) fulfils a status criterion that is predefined, in particular predefined on a battery-specific basis, and operates the battery (40, 41) in special operation and disconnects it from the traction network (30) as soon as the status of the battery (40, 41) no longer fulfils the status criterion that is predefined, in particular predefined on a battery-specific basis.

7. Rail vehicle (10) according to one of the preceding claims, **characterised in that**
the rail vehicle (10) has a central facility (150), which is connected to traction network switches (50, 51) of two or more batteries (40, 41), and these can be switched from normal operation to special operation.

8. Rail vehicle (10) according to one of the preceding claims, **characterised in that**
the rail vehicle (10) has a central facility (150), which is connected to two or more control facilities (90, 91) dedicated for the batteries, and the traction network switches (50, 51) of the respective batteries (40, 41) can switch with the inclusion of the control facilities (90, 91) that are dedicated for the batteries.

9. Rail vehicle (10) according to one of the preceding claims, **characterised in that**
the battery (40, 41) forms a constituent part of a battery branch (401, 402) of a traction battery unit (40), which has at least two battery branches (401, 402), of the vehicle.

10. Rail vehicle (10) according to claim 9,
**characterised in that**
- the rail vehicle (10) is embodied in such a manner that it can operate each of the battery branches (401, 402) of the traction battery unit (400) in normal operation or in special operation on a branch-specific basis,
- wherein each of the battery branches (401, 402) in normal operation is connected to the traction network (30) via at least one traction network switch (50, 51) that is dedicated for the battery branch or is assigned to the battery branch (401, 402), and in special operation is disconnected from the traction network (30) by the traction network switch (50, 51),
- wherein each of the battery branches (401, 402), in the event of a connection to the on-board network (200) already existing during normal operation, remains connected thereto and otherwise is connected to the on-board network (200).

11. Rail vehicle (10) according to one of the preceding claims 9-10,
**characterised in that**
- the rail vehicle (10), for at least one of the battery branches (401, 402), preferably in each case each of the battery branches (401, 402), has a monitoring facility (80, 81) dedicated for the battery branch, which detects the status, in particular the aging status, of the respective battery branch (401, 402) and generates a status indication (ZA), which indicates whether or not the respective battery branch (401, 402) fulfils the status criterion, which is preferably battery branch-specific.

12. Rail vehicle (10) according to claim 11,
**characterised in that**
for at least one of the battery branches (401, 402), preferably in each case each of the battery branches (401, 402), the monitoring facility (80, 81) that is dedicated for the battery branch is connected to a control facility (90, 91) that is dedicated for the battery branch, which has the respective traction network switch (50, 51) opened or closed as a function of the status indication (ZA).

13. Rail vehicle (10) according to one of the preceding claims 11-12,
**characterised in that**
for at least one of the battery branches (401, 402), preferably in each case each of the battery branches (401, 402), the monitoring facility (80, 81) that is dedicated for the battery branch is connected to a central facility (150), which has the respective traction network switch (50, 51) opened or closed as a function of the status indication (ZA) of the monitoring facility (80, 81).

14. Rail vehicle (10) according to one of the preceding claims,
**characterised in that**
the battery (40, 41) or a battery module or battery branch (401, 402) formed thereby is equipped with a cooling facility (KE) which operates as a function of the mode of operation and cools the battery (40, 41) differently as a function of the mode of operation, i.e. as a function of normal operation or special operation, and/or is equipped with a control device (SG) which operates as a function of the mode of operation and controls the battery (40, 41) differently as a function of the mode of operation, i.e. as a function of normal operation or special operation, and to this end has different control modes as a function of the mode of operation.

15. Method for operating a rail vehicle (10), which is equipped with:
- at least one traction network (30), with which at least one drive (20) of the rail vehicle (10) can be fed electrical energy,
- at least one electrical on-board network (200), with which other components of the rail vehicle (10) can be fed, and
- at least one battery (40, 41),
wherein
- the battery (40, 41) is optionally operated in a normal operation or a special operation, wherein the battery (40, 41)
- in normal operation is connected to the traction network (30) via at least one traction network switch (50, 51) that is dedicated for the battery or is assigned to the battery (40, 41) and
- in special operation is disconnected from the traction network (30) by the traction network switch (50, 51),
- **characterised in that** the battery (40, 41), in the event of a connection to the on-board network (200) already existing during normal operation, remains connected thereto and otherwise is connected to the on-board network (200), and
- the rail vehicle (10) has a monitoring facility (80, 81), which detects the status of the battery (40, 41) and operates the battery (40, 41) in normal operation and has it connected to the traction network (30) as long as the battery (40, 41) fulfils a predefined status criterion, and operates the battery (40, 41) in special operation and disconnects it from the traction network (30) as soon as the status of the battery (40, 41) no longer fulfils the predefined status criterion.

## Revendications

1. Véhicule (10) ferroviaire, comprenant
- au moins un réseau (30) de traction électrique, par lequel au moins un entraînement (20) du véhicule (10) ferroviaire peut être alimenté en énergie électrique,
- au moins un réseau de bord (200) électrique, par lequel d'autres composants du véhicule (10) ferroviaire peuvent être alimentés,
- au moins une batterie (40, 41),
dans lequel
le véhicule (10) ferroviaire est conformé, de manière à pouvoir faire fonctionner la batterie (40, 41) suivant un fonctionnement normal et suivant un fonctionnement particulier, dans lequel la batterie (40, 41) est, dans un fonctionnement normal, reliée au réseau (30) de traction par au moins un interrupteur (50, 51) de réseau de traction propre à la batterie ou associé à la batterie (40, 41) et est, dans le fonctionnement particulier, séparé du réseau (30) de traction par l'interrupteur (50, 51) du réseau de traction, **caractérisé en ce que**
la batterie (40, 41), dans le cas d'une liaison, existante déjà pendant le fonctionnement normal, au réseau (200) de bord, reste, dans le fonctionnement particulier, on la relie au réseau (200) de bord et sinon, on la relie au réseau (200) de bord, et
le véhicule (10) ferroviaire a un dispositif (80, 81) de contrôle, qui détecte l'état de la batterie (40, 41) et qui fait fonctionner la batterie (40, 41) dans le fonctionnement normal et la laisse reliée au réseau (30) de traction, tant que la batterie (40, 41) satisfait un critère d'état donné à l'avance et fait fonctionner la batterie (40, 41) dans le fonctionnement particulier et la sépare du réseau (30) de traction, dès que l'état de la batterie (40, 41) ne satisfait plus le critère d'état donné à l'avance.

2. Véhicule (10) ferroviaire suivant la revendication 1,
**caractérisé en ce que**
le dispositif (80, 81) de contrôle détecte un état de vieillissement de la batterie (40, 41).

3. Véhicule (10) ferroviaire suivant l'une des revendications précédentes,
**caractérisé en ce que**
- la batterie (40) ou au moins l'une des batteries (40) est, par un interrupteur (60) de réseau de bord propre à la batterie ou associé à la batterie (40), séparée du réseau (200) de bord et, dans le fonctionnement particulier, est reliée au réseau (200) de bord électrique par l'interrupteur (60) de réseau de bord propre à la batterie ou associé à la batterie (40).

4. Véhicule (10) ferroviaire suivant l'une des revendications précédentes,
**caractérisé en ce que**
la batterie (40, 41), ou du moins l'une des batteries (40, 41) est, déjà dans le fonctionnement normal, reliée fixement au réseau (200) de bord par au moins une ligne et reste, dans le fonctionnement particulier, reliée au réseau (200) de bord électrique.

5. Véhicule (10) ferroviaire suivant l'une des revendications précédentes,
**caractérisé en ce que**
- le véhicule (10) ferroviaire est conformé de manière à ce que chaque batterie (40, 41), qui est reliée en fonctionnement normal au réseau (30) de traction, peut fonctionner individuellement en batterie en fonctionnement normal ou en fonctionnement particulier,
- dans lequel chacune des batteries (40, 41) est, en fonctionnement normal, reliée au réseau (30) de traction par au moins un interrupteur (50, 51) du réseau de traction propre à la batterie ou associé à la batterie (40, 41) et, en fonctionnement particulier, est séparée du réseau (30) de traction par l'interrupteur (50, 51) respectif du réseau de traction.

6. Véhicule (10) ferroviaire suivant la revendication 5, **caractérisé**
- **en ce que** le véhicule (10) ferroviaire a au moins un dispositif (80, 81) de contrôle propre aux batteries (40, 41), de préférence pour respectivement pour chaque batterie (40, 41), qui détecte l'état, en particulier l'état de vieillissement de la batterie (40, 41) respective, et fait fonctionner les batteries (40, 41) dans le fonctionnement normal et les laisse reliées au réseau (30) de traction, tant que la batterie (40, 41) satisfait un critère d'état donné à l'avance, en particulier donné à l'avance individuellement par batterie, et fait fonctionner les batteries (40, 41) dans le fonctionnement particulier et les sépare du réseau (30) de traction, dès que l'état des batteries (40, 41) ne satisfait plus le critère d'état donné à l'avance, en particulier donné à l'avance individuellement par batterie.

7. Véhicule (10) ferroviaire suivant l'une des revendications précédentes,
**caractérisé en ce que**
le véhicule (10) ferroviaire a un dispositif (150) central, qui est en liaison avec des interrupteurs (50, 51) de réseau de traction de deux ou de plusieurs batteries (40, 41) et qui peut commuter celles-ci du fonctionnement normal au fonctionnement particulier.

8. Véhicule (10) ferroviaire suivant l'une des revendications précédentes,
**caractérisé en ce que**
le dispositif (10) ferroviaire a un dispositif (150) central, qui est en liaison avec deux ou plusieurs dispositifs (90, 91) de commande propres à une batterie et qui peut commuter les interrupteurs (50, 51) de réseau de traction des batteries (40, 41) respectives, y compris les dispositifs (90, 91) de commande propres à une batterie.

9. Véhicule (10) ferroviaire suivant l'une des revendications précédentes,
**caractérisé en ce que**
la batterie (40, 41) forme un constituant d'une branche (401, 402) de batterie d'une unité (400) de batteries de traction, comportant au moins deux branches (401, 402) de batterie.

10. Véhicule (10) ferroviaire suivant la revendication 9, **caractérisé en ce que**
- le véhicule (10) ferroviaire est conformé de manière à pouvoir faire fonctionner chacune des branches (401, 402) de batterie de l'unité (400) de batteries de traction individuellement par branche dans le fonctionnement normal et dans le fonctionnement particulier,
- dans lequel chacune des branches (401, 402) de batterie est, dans le fonctionnement normal, reliée au réseau (30) de traction par au moins un interrupteur (50, 51) de réseau de traction propre à une batterie ou associé à la branche (401, 402) de batterie et est, dans le fonctionnement particulier, séparé du réseau (30) de traction par l'interrupteur (50, 51) du réseau de traction,
- dans lequel chacune des branches (401, 402) de batterie, dans le cas d'une liaison, déjà existante dans le fonctionnement normal, au réseau (200) de bord, reste reliée à celui-ci et sinon, on la relie au réseau (200) de bord.

11. Véhicule (10) ferroviaire suivant l'une des revendications 9 à 10 précédentes,
**caractérisé en ce que**
- le véhicule (10) ferroviaire a, pour au moins l'une, de préférence pour chacune des branches (401, 402) de batterie, un dispositif (80, 81) de contrôle propre à une batterie, qui détecte l'état, en particulier l'état de vieillissement de la branche (401, 402) respective de batterie et qui produit une indication (ZA) d'état, qui indique si la branche (401, 402) respective de batterie satisfait, ou non, le critère d'état, qui, de préférence est individuel par branche de batterie.

12. Véhicule (10) ferroviaire suivant la revendication 11,
**caractérisé en ce que**,
pour au moins l'une, de préférence pour chacune des branches (401, 402) de batterie, le dispositif (80, 81) de contrôle propre à une branche de batterie est en liaison avec un dispositif (90, 91) de commande propre à une branche de batterie, qui ouvre ou ferme, en fonction de l'indication (ZA) d'état, l'interrupteur (50, 51) de réseau de traction respectif.

13. Véhicule (10) ferroviaire suivant l'une des revendications 11 à 12 précédentes,
**caractérisé en ce que**,
pour au moins l'une, de préférence, pour chacune des branches (401, 402) de batterie, le dispositif (80, 81) de contrôle propre à une branche de batterie est en liaison avec un dispositif (150) central, qui, en fonction de l'indication (ZA) d'état du dispositif (80, 81) de contrôle, fait ouvrir ou fermer l'interrupteur (50, 51) du réseau de traction respectif.

14. Véhicule (10) ferroviaire suivant l'une des revendications précédentes,
**caractérisé en ce que**
la batterie (40, 41) ou un module de batterie formé par celle-ci ou une branche (401, 402) de batterie est équipé d'un dispositif (KE) de refroidissement fonctionnant en fonction du type de fonctionnement, qui refroidit différemment la batterie (40, 41) en fonction du type de fonctionnement, donc en fonctionnement du fonctionnement normal ou du fonctionnement particulier, et/ou est équipé d'un appareil (SG) de commande fonctionnant en fonction du type de fonctionnement, qui commande différemment la batterie (40, 41) donc en fonction du type de fonctionnement, en fonction du fonctionnement normal ou du fonctionnement particulier, et qui a, à cet effet, des modes de commande différents en fonction du type de fonctionnement.

15. Procédé pour faire fonctionner un véhicule (10) ferroviaire, qui est équipé de :
- au moins un réseau (30) de traction électrique, par lequel au moins un entraînement (20) du véhicule (10) ferroviaire peut être alimenté en énergie électrique,
- au moins un réseau de bord (200) électrique, par lequel d'autres composants du véhicule (10) ferroviaire peuvent être alimentés,
- au moins une batterie (40, 41),
dans lequel
- on fait fonctionner la batterie (40, 41) au choix, suivant le fonctionnement normal ou suivant un fonctionnement particulier, dans lequel la batterie (40, 41)
- en fonctionnement normal est reliée au réseau (30) de traction par au moins un interrupteur (50, 51) du réseau de traction propre à la batterie ou associé à la batterie (40, 41), et
- est séparée, en fonctionnement particulier, du réseau (30) de traction, par l'interrupteur (50, 51) du réseau de traction,
- **caractérisé en ce que** la batterie (40, 41) reste, dans le fonctionnement particulier, dans le cas d'une liaison, déjà existante en fonctionnement normal, au réseau (200) de bord en liaison avec celui-ci et sinon, on la relie au réseau (200) de bord, et
- le véhicule (10) ferroviaire a un dispositif (80, 81) de contrôle, qui détecte l'état de la batterie (40, 41) et qui fait fonctionner la batterie (40, 41) dans le fonctionnement normal et la laisse reliée au réseau (30) de traction, tant que la batterie (40, 41) satisfait un critère d'état donné à l'avance et fait fonctionner la batterie (40, 41) dans le fonctionnement particulier et la sépare du réseau (30) de traction, dès que l'état de la batterie (40, 41) ne satisfait plus le critère d'état donné à l'avance.
